# FASCICULE DE BREVET EUROPEEN

(11) **EP 2 948 644 B1**
(45) Date de publication et mention de la délivrance du brevet: **03.05.2017**
(21) Numéro de dépôt: 14704840.9
(22) Date de dépôt: 21.01.2014
(51) Int. Cl.: H02G 3/32, B65D 63/04, F02C 7/00

(54) **DISPOSITIF DE FIXATION ET DE MAINTIEN D'AU MOINS UN HARNAIS ELECTRIQUE DANS UNE TURBOMACHINE**
VORRICHTUNG ZUM BEFESTIGEN UND HALTEN VON WENIGSTENS EINEM ELEKTRISCHEN KABELBAUM IN EINER TURBOMASCHINE
DEVICE FOR SECURING AND RETAINING AT LEAST ONE ELECTRICAL HARNESS IN A TURBOMACHINE

(30) Priorité: 24.01.2013 FR 1350614
(43) Date de publication de la demande: 02.12.2015
(73) Titulaire: SNECMA, 75015 Paris (FR)
(72) Inventeur: BOUDEBIZA, Tewfik, F-77550 Moissy Cramayel (FR); MARCILLAUD, Guillaume, F-77550 Moissy Cramayel (FR); ZIEGLER, Michel, Henri, F-77550 Moissy Cramayel (FR)
(74) Mandataire: Cabinet Camus Lebkiri
(86) Numéro de dépôt international: PCT/FR2014/050107
(87) Numéro de publication internationale: WO 2014/114869

(56) Documents cités:
- EP-A1- 2 437 365
- FR-A1- 2 950 662
- US-A- 4 289 288
- US-A1- 2002 043 592

## Description

### DOMAINE

La présente invention se rapporte au domaine technique des dispositifs de fixations d'une pluralité de tubes ou de câbles destinés à s'étendre dans un périmètre donné. Plus particulièrement, le domaine de l'invention concerne les fixations de harnais dans les applications des turboréacteurs soumis à de fortes contraintes mécaniques.

### ETAT DE L'ART

Il existe des dispositifs de fixation de harnais électriques notamment tels que ceux décrits dans la demande FR2856772 décrivant un dispositif de mise en place et de maintien de harnais électriques sur un turboréacteur.

Ce dispositif permet de maintenir une pluralité de harnais disposés en périphérie d'un turboréacteur. Un inconvénient de cette solution est que le dispositif ne permet pas une souplesse dans l'usage, par exemple lorsque l'on souhaite ajouter un harnais. En outre, ce dispositif nécessite d'utiliser des harnais dont les dimensions répondent à un standard.

Enfin, un dernier inconvénient correspond à la gestion d'un équipement mécanique supplémentaire, telle qu'une barrette qui doit être fixée à la périphérie du turboréacteur.

Il existe également des dispositifs, tels que décrits dans la demande FR2950662, qui permettent de fixer un harnais électrique à un carter de turbomachine. Cet élément permet d'adapter le diamètre de serrage au diamètre du harnais par une partie thermo-rétractable. Cependant, ce dernier dispositif comporte des inconvénients. Notamment, il reste difficile de maintenir une pluralité de harnais ensembles. En outre, lors de la maintenance de ces pièces ou lors du réglage de leur agencement sur la turbomachine, ce dispositif n'offre pas toute la souplesse d'utilisation requise puisque un démontage impose de remplacer la partie de serrage.

Le document US4289288 divulgue un dispositif de fixation similaire.

Il existe également une autre solution pour maintenir et fixer des harnais en périphérie d'une turbomachine décrite dans le document FR2966651. Cette solution comprend un accessoire qui est fixé en périphérie de la turbomachine et qui comprend une pluralité de colliers permettant de maintenir des harnais électriques. Cette solution impose un montage serré et laisse peu de marge de manoeuvre sur l'agencement des différentes pièces. En outre, elle est comme les précédentes solutions peu flexibles en cas d'ajouts d'un harnais par exemple. Enfin, cette solution présente des inconvénients lorsque pour l'entretien, les pièces doivent être démontées.

Il existe des solutions utilisant un bloc silicone permettant de maintenir les harnais. Cependant cette solution a l'inconvénient de devoir créer un moule spécifique pour chaque bloc silicone ainsi qu'un système de fermeture des blocs. Un désavantage est que cette solution engendre une masse et un coût élevé.

Les solutions de l'art antérieur comportent toutes l'inconvénient de devoir assurer l'existence d'un point spécifique de maintien pour chaque harnais, par exemple par une lyre ou un collier. En outre, pour chaque harnais, il est nécessaire d'assurer la présence de plusieurs points spécifiques de maintien à différents endroits du harnais.

Chaque solution de l'art antérieur comprend la présence d'un élément, tel qu'une lyre ou un collier, qui doit être adapté à une taille standard de harnais. Or il n'est pas toujours possible d'obtenir de tels éléments, ce qui implique des déformations, des battements ou des maintiens non adaptés aux dimensions du harnais. De ce fait, des usures prématurées peuvent survenir sur les harnais.

De créer un moule spécifique pour chaque bloc silicone, ainsi qu'un système de fermeture des blocs qui engendre une masse et un coût élevé.

### RESUME DE L'INVENTION

L'invention permet de résoudre les inconvénients précités.

Un objet de l'invention concerne un dispositif de fixation et de maintien d'au moins un harnais électrique dans une turbomachine. Le dispositif comprend :
- au moins un profilé creux s'étendant selon une direction et comportant au moins deux fentes sensiblement de même dimension et ;
- un élément de serrage destiné à maintenir en position ledit au moins un harnais parallèlement au profilé creux,

L'élément de serrage comprend en outre :
- une bande autoagrippante ajustée pour coopérer avec la largeur des fentes de sorte à permettre son passage de part et d'autre du profilé et ;
- une butée solidaire de la bande, ladite butée permettant le blocage de son passage au travers de l'une des fentes du profilé.

Un avantage de l'invention de réduire le nombre de points de fixation des harnais. La bande autoagrippante permet un contact sur une surface importante, qui correspond à une surface de recouvrement de la bande sur elle-même lorsqu'elle enroule le profilé et les harnais.

Avantageusement, la butée est disposée à l'une des extrémités de la bande autoagrippante.

Un avantage est que la butée permet de retenir la bande en une extrémité. De ce fait, elle constitue un point d'appui notamment pour faciliter le serrage lors de l'enroulement de la bande autour du profilé et des harnais.

Avantageusement, la bande autoagrippante est en matériau de type métallique ou composite. Un avantage est que la force de maintien permet une fixation sans jeu et sans battement tout en assurant le maintien évitant une usure des harnais.

Avantageusement, le profilé est un tube cylindrique. Cette configuration est facilement réalisable et peu onéreuse. Elle permet d'offrir une symétrie vis-à-vis de la disposition des harnais autour du tube et d'équilibrer la charge maintenue.

Avantageusement, les deux fentes sont agencées de sorte à être diamétralement opposées et sensiblement en regard l'une de l'autre. Cette configuration permet de passer facilement la bande d'une fente à l'autre sans avoir à utiliser un outil à insérer dans le tube pour guider l'élément de serrage. Par ailleurs, cette configuration permet de répartir les efforts de serrage au niveau des contacts de la bande avec les bords de la fente. Ainsi la bande s'use moins et reporte moins d'effort mécanique sur le profilé.

Un autre objet de l'invention concerne un système d'attache comportant un dispositif de fixation et de maintien comportant au moins un harnais qui est fixé et maintenu par un enroulement de la bande autoagrippante autour du profilé et d'au moins un harnais. L'enroulement est effectué de sorte qu'une première face de la bande est en contact de la seconde face de ladite bande.

Un avantage est de permettre d'ajuster la surface de recouvrement de la bande autoagrippante et donc d'augmenter la force de maintien. Dans une configuration spécifique la surface de recouvrement est étendue à un tour entier.

Avantageusement, au moins un harnais est recouvert d'une gaine thermo-rétractable. Cette dernière permet de protéger les harnais, notamment au niveau du recouvrement du dispositif de serrage.

Un autre objet de l'invention concerne une turbomachine comprenant :
- une canalisation fixée à ladite turbomachine et ;
- un dispositif de fixation et de maintien de l'invention, l'élément de serrage permettant de maintenir ledit au moins un harnais, le profilé et la canalisation solidaires.

### BREVES DESCRIPTION DES FIGURES

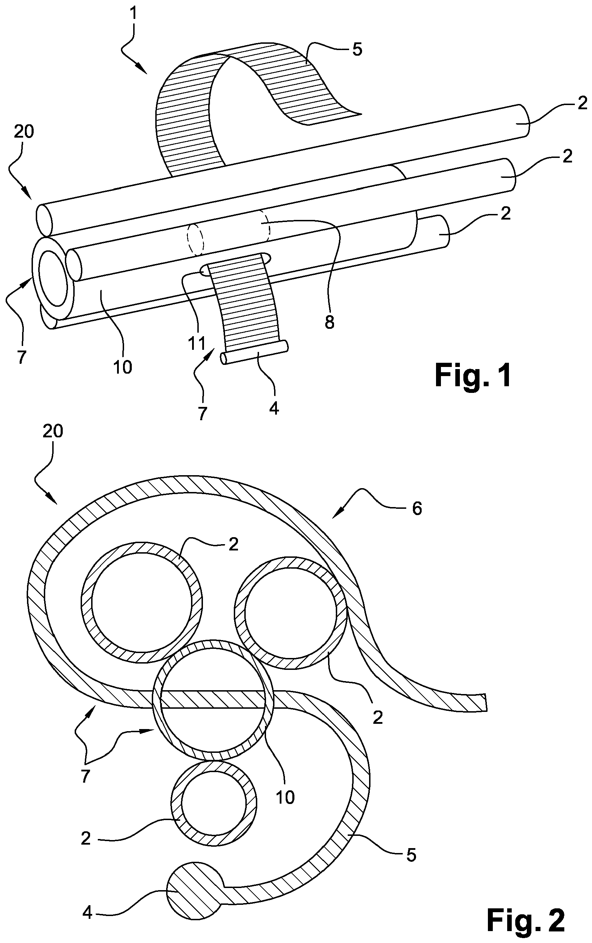

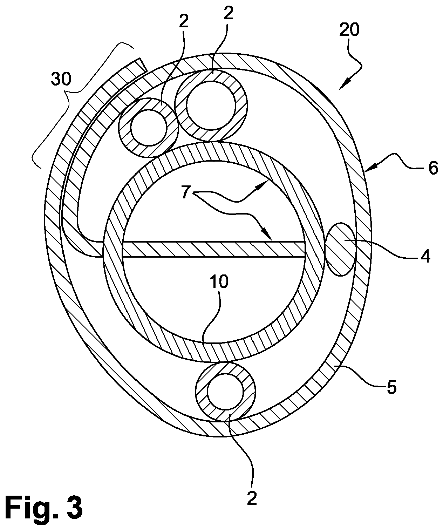

D'autres caractéristiques et avantages de l'invention ressortiront à la lecture de la description détaillée qui suit, en référence aux figures annexées, qui illustrent :
▪ figure 1 : une vue en perspective du dispositif de l'invention ;
▪ figure 2 : une vue en coupe du dispositif de l'invention dans une position ouverte ;
▪ figure 3 : une vue en coupe du dispositif de l'invention dans une position fermée.

### DESCRIPTION

Dans la suite de la description, on entend par « profilé » un élément mécanique s'étendant selon une dimension et comportant une section constante.

Dans la présente description, on nomme un profilé régulier un tube et un profilé non régulier tout autre élément s'étendant selon une dimension et qui n'est pas un tube.

Un exemple de bande autoagrippante est plus connu sous le nom de « Velcro » dont la marque est déposée. Le terme « Velcro » est utilisé dans le langage courant comme nom générique pour désigner un matériau textile. Elle consiste en deux bandes recouvertes chacune d'une texture différente, permettant lorsqu'on les met en contact d'obtenir rapidement une liaison amovible.
La figure 1 représente le dispositif 7 de fixation et de maintien de l'invention comprenant le tube 10 et un élément de serrage 1. L'élément de serrage comprend une bande 5 et une butée 4.

La figure 1 représente également le système d'attache 20 de l'invention comportant le dispositif 7 de fixation et de maintien ainsi que les harnais 2. Les harnais 2 sont ainsi maintenus par le dispositif 7. Le dispositif de fixation 7 peut être utilisé de sorte à rendre solidaire les harnais, un profilé et une canalisation, ladite canalisation étant fixée à la turbomachine.

En effet, les canalisations sont fixées à la turbomachine et présentent les avantages d'avoir une forme tubulaire et d'être rigides. Elles permettent donc un bon support pour les harnais. Le dispositif de fixation et de maintien 7 est donc particulièrement adapté à la fixation des harnais et du profilé sur une canalisation d'une turbomachine.

Dans le cas d'une canalisation souple, le dispositif de fixation et de maintien peut également être utilisé pour fixer les harnais à cette canalisation.

Lorsque différentes canalisations sont fixées le long de la turbomachine, des dispositifs 7 de fixation et de maintien peuvent être répartis sur différentes canalisations de sorte à acheminer différents groupes de harnais.

Selon un exemple de réalisation, le profilé est un profilé régulier tel qu'un tube 10. Selon d'autres variantes, le profilé peut avoir une section ovale, rectangulaire, carré ou de type losange. Par exemple, un profilé de type losange peut comporter l'intérêt d'offrir quatre surfaces d'appui pour les harnais 2 en limitant la possibilité qu'un harnais se mêle à un autre.

Le cas de figure dans lequel le profilé 10 a une section circulaire permet d'obtenir une relative souplesse de configuration pour agencer des harnais 2 tout autour de la circonférence du tube 10.

Selon un mode de réalisation, le tube 10 est creux de sorte à alléger la structure générale de support de harnais 2. Selon les modes de réalisation, le diamètre du tube 10 et son épaisseur peuvent être choisis de sorte à répondre à un besoin d'acheminement des harnais 2 sur une distance donnée tout en offrant un support assurant un rapport entre des dimensions souhaitées, une masse limite acceptable et une résistance donnée.

Le profilé 10 peut être localement déformable selon son épaisseur, sa forme et/ou des contraintes mécaniques qui lui sont appliquées. En général, un profilé déformable sera choisi creux métallique par exemple. La rigidité du matériau du profilé 10 est choisie selon la configuration souhaitée comme par exemple une masse de harnais à maintenir. Le choix d'un matériau déformable permet d'adapter certaines configurations d'attaches de harnais le long du profilé au regard par exemple d'un gain d'encombrement.

Dans l'exemple de la figure 1, il y a trois harnais 2 disposés autour du tube 10.

Le tube 10 est pourvu de deux fentes 11 dont une seule est représentée sur la vue en perspective de la figure 1. Les deux fentes sont conçues pour permettre le passage d'une bande. Elles sont de préférences identiques.

Le dispositif de fixation et de maintien de l'invention comprend un élément de serrage 1 qui comporte une bande 5 et une butée 4.

La bande 5 est adaptée pour passer librement dans les fentes 11 du tube 10. Seule une fente 11 est représentée sur la figure 1. Selon un mode de réalisation, la bande 5 comprend une largeur légèrement inférieure à la largeur des fentes 11 et une épaisseur légèrement inférieure à l'épaisseur des fentes 11, dans ce cas elle est ajustée aux dimensions des fentes 11. Dans cette dernière configuration, les efforts de serrage exercés par l'élément de serrage 1 sur le tube 10 sont optimisés du point de vue de leur répartition sur le tube 10. L'usure de l'élément de serrage 1 est alors réduite.

La bande 5 étant introduite dans les deux fentes 11, elle peut être entièrement introduite de sorte que la butée 4 soit plaquée contre la fente 11. La butée 4 comporte avantageusement des dimensions supérieures à la fente destinée à retenir la butée 4, notée fente de rétention. Indifféremment lorsque les fentes sont identiques, la fente de rétention est choisie arbitrairement, il s'agit de celle par laquelle la bande est introduite.

Selon un mode de réalisation, si une fente 11 est spécialement destinée à être la fente de rétention, des renforts mécaniques peuvent être disposés sur le tube 10 autour de ladite fente de rétention de sorte que la butée 4 soit en appui sur les renforts plutôt que sur le tube 10. Ce mode n'est pas représenté sur la figure 1.

Selon une configuration, la butée 4 comporte une largeur supérieure à celle de la fente de rétention 11. En outre, elle peut comprendre une épaisseur supérieure à celle de la fente de rétention 11. Ainsi la butée 4 exerce une réaction optimisée sur le tube tout autour de la fente 11.

Selon un mode de réalisation, la butée 4 comporte une surface de contact coopérant localement avec la forme du tube. Dans ce cas de figure, la butée est légèrement courbée selon sa surface destinée à être en contact avec le tube.

La figure 2 représente une vue de coupe perpendiculaire à l'axe longitudinal dans lequel s'étend le tube 10 et les harnais 2.

Le dispositif 7 est dit « dans une position ouverte ». Dans cet exemple correspondant à la configuration de la figure 1, il y a trois harnais 2 qui sont agencés autour du tube 10. Les harnais peuvent être de différents diamètres. Ainsi la bande 5 peut être choisie d'une certaine longueur permettant d'assurer le recouvrement des harnais.

La longueur de la bande peut être choisie de sorte à permettre une certaine adaptabilité aux changements de configurations tel que le cas de figure où un harnais est ajouté dans le système d'attache 20.

La figure 3 représente une vue de coupe perpendiculaire à l'axe longitudinal dans lequel s'étend le tube 10 et les harnais 2.

Le dispositif 7 est dit « dans une position fermée ». L'élément de serrage 1 est enroulé autour du tube 10 et des harnais 2.

La bande comprend deux surfaces, une surface supérieure et une surface inférieure. La surface supérieure et la surface inférieure de la bande 5 sont adaptées pour coopérer de sorte à générer un contact amovible lorsqu'elles sont plaquées l'une contre l'autre.

Une seconde partie de la bande 5 recouvre sur une zone 30, également appelée surface de recouvrement, une première partie de la bande 5. Les deux parties sont situées à deux endroits différents de la bande. Elles sont généralement situées aux deux extrémités de la bande 5 de sorte qu'elles puissent être en contact après que la bande soit enroulée autour du tube 10 et des harnais 2.

Selon un mode de réalisation, la bande est intégralement autoagrippante sur toute sa longueur. Selon une variante, elle est autoagrippante sur des parties seulement de sa surface.

Selon les modes de réalisation, la bande autoagrippante peut être une bande autoagrippante composite ou métallique.

Dans le cadre du maintien et du routage des harnais électriques pour les turboréacteurs, le système d'attache 20 comprend un tube 10 cylindrique creux ou profilé creux. Les différents harnais 2 sont positionnés autour de ce tube 10. Deux fentes traversantes 11 diamétralement opposées sur le tube 10 font office de passage de la bande autoagrippante 5 métallique ou composite. Cette dernière bande 5 contribue avec la butée 4 à réaliser une fonction de maintien et servent le système d'attache 20 à réaliser une fonction de positionnement et de verrouillage des harnais électriques par rapport au tube 10.

L'invention concerne en outre une turbomachine qui comprend un circuit hydraulique non représenté ayant une pluralité de canalisation. Le système d'attache 1 de l'invention est adapté à être installé le long des canalisations.

L'invention comprend les avantages suivants :
- Une réduction du nombre de fixation sur un harnais. En effet, il n'est plus besoin de disposer de lyres, de colliers ou de bloc silicone.
- Un serrage amélioré car les battements sont réduits, voire supprimés.
- Une amélioration du « clippage » du harnais.
- Un guidage amélioré des harnais grâce au tube servant de rail relié au moteur, notamment en très peu de points. Il y a donc moins de supports et donc plus de facilité de montage et de maintenance.
- Une diminution des risques d'erreurs sur le choix des tailles de standards qui étaient nécessaire avec les lyres, les colliers, et les blocs silicones.

## Revendications

1. Dispositif de fixation et de maintien (7) d'au moins un harnais électrique (2) dans une turbomachine, comprenant :
• au moins un profilé creux (10) s'étendant selon une direction et comportant au moins deux fentes (11) sensiblement de mêmes dimensions et ;
• un élément de serrage (1) destiné à maintenir en position ledit au moins un harnais (2) parallèlement au profilé creux (10),
**caractérisé en ce que** ledit élément de serrage (1) comprend :
• une bande autoagrippante (5) ajustée pour coopérer avec la largeur des fentes (11) de sorte à permettre son passage de part et d'autre du profilé (10) et ;
• une butée (4) solidaire de la bande (5), ladite butée (4) permettant le blocage de son passage au travers de l'une des fentes (11) du profilé (10).

2. Dispositif de fixation et de maintien (7) selon la revendication 1, **caractérisé en ce que** la butée (4) est disposée à l'une des extrémités de la bande autoagrippante (5)

3. Dispositif de fixation et de maintien (7) selon l'une quelconque des revendications 1 à 2, **caractérisé en ce que** la bande autoagrippante (5) est en matériau de type métallique.

4. Dispositif de fixation et de maintien (7) selon l'une quelconque des revendications 1 à 2, **caractérisé en ce que** la bande autoagrippante (5) est en matériau de type composite.

5. Dispositif de fixation et de maintien (7) selon l'une quelconque des revendications 1 à 4, **caractérisé en ce que** le profilé (10) est un tube cylindrique.

6. Dispositif de fixation et de maintien (7) selon l'une quelconque des revendications 1 à 5, **caractérisé en ce que** les aux moins deux fentes (11) sont agencées de sorte à être diamétralement opposées et sensiblement en regard l'une de l'autre.

7. Système d'attache comportant un dispositif de fixation et de maintien (7) selon l'une quelconque des revendications 1 à 6 et au moins un harnais, **caractérisé en ce que** ledit au moins un harnais (2) est fixé et maintenu par un enroulement de la bande autoagrippante (5) autour du profilé (10) et dudit harnais (2) de sorte qu'une première face de la bande (5) soit en contact de la seconde face de ladite bande (5).

8. Système d'attache selon la revendication 7, **caractérisé en ce qu'**au moins un harnais (2) est recouvert d'une gaine thermo-rétractable (8).

9. Turbomachine comprenant au moins une canalisation fixée à ladite turbomachine et un dispositif (7) de fixation et de maintien selon l'une quelconque des revendications 1 à 6, l'élément de serrage (1) permettant de maintenir ledit au moins un harnais (2), le profilé (10) et la canalisation solidaires.

## Patentansprüche

1. Befestigungs- und Haltevorrichtung (7) wenigstens eines elektrischen Geschirrs (2) in einer Turbomaschine, umfassend:
- wenigstens ein hohles Profil (10), das sich gemäß einer Richtung erstreckt und wenigstens zwei Schlitze (11) umfasst; die deutlich dieselben Abmessungen haben, und;
- ein Einspannelement (1), das zum Halten des genannten wenigstens einen Geschirrs (2) in der Position parallel zum hohlen Profil (10) bestimmt ist:
**dadurch gekennzeichnet, dass** das genannte Einspannelement (1) umfasst;
- ein selbsthaftendes Band (5), das angepasst ist, um mit der Breite der Schlitze (11) derart zusammenzuwirken, dass sein Durchgang auf jeder Seite des Profils (10) zugelassen wird, und;
- einen fest mit dem Band (5) verbundenen Anschlag (4), wobei der genannte Anschlag (4) die Verriegelung seines Durchgangs durch einen der Schlitze (11) des Profils (10) zulässt.

2. Befestigungs- und Haltevorrichtung (7) gemäß Anspruch 1, **dadurch gekennzeichnet, dass** der Anschlag (4) an einem der Enden des selbsthaftenden Bandes (5) angeordnet ist.

3. Befestigungs- und Haltevorrichtung (7) gemäß irgendeinem der Ansprüche 1 bis 2, **dadurch gekennzeichnet, dass** das selbsthaftende Band (5) aus einem Material vom metallischen Typ ist.

4. Befestigungs- und Haltevorrichtung (7) gemäß irgendeinem der Ansprüche 1 bis 2, **dadurch gekennzeichnet, dass** das selbsthaftende Band (5) aus einem Material vom Verbundtyp ist.

5. Befestigungs- und Haltevorrichtung (7) gemäß irgendeinem der Ansprüche 1 bis 4, **dadurch gekennzeichnet, dass** das Profil (10) eine zylindrische Röhre ist.

6. Befestigungs- und Haltevorrichtung (7) gemäß irgendeinem der Ansprüche 1 bis 5, **dadurch gekennzeichnet, dass** die wenigstens zwei Schlitze (11) derart angeordnet sind, dass sie genau entgegengesetzt und einander deutlich gegenüber angeordnet sind.

7. Befestigungssystem, umfassend eine Befestigungs- und Haltevorrichtung (7) gemäß irgendeinem der Ansprüche 1 bis 6 und wenigstens ein Geschirr, **dadurch gekennzeichnet, dass** das genannte wenigstens eine Geschirr (2) durch eine Wicklung des selbsthaftenden Bandes (5) um das Profil (10) und das genannte Geschirr (2) derart befestigt und gehalten wird, dass eine erste Seite des Bandes (5) mit der zweiten Seite des genannten Bandes (5) in Kontakt ist.

8. Befestigungssystem gemäß Anspruch 7, **dadurch gekennzeichnet, dass** wenigstens ein Geschirr (2) mit einer heißschrumpfbaren Hülle (8) abgedeckt ist.

9. Turbomaschine, umfassend wenigstens eine an der genannten Turbomaschine befestigte Kanalisation und eine Befestigungs- und Haltevorrichtung (7) gemäß irgendeinem der Ansprüche 1 bis 6, wobei das Einspannelement (1) das Festhalten des genannten wenigstens einen Geschirrs (2), des Profils (10) und der fest befestigten Kanalisationen zulässt.

## Claims

1. Device for securing and retaining (7) at least one electrical harness (2) in a turbomachine, comprising:
- at least one hollow profiled element (10) that extends in one direction and that has at least two slots (11) of substantially the same dimension and;
- a clamping element (1) intended to retain said at least one harness (2) in position parallel to the hollow profiled element (10), **characterised in that** said clamping element (1) comprises:
- a touch-and-close tape (5) designed to cooperate with the width of the slots (11) so as to allow it to pass on both sides of the profiled element (10) and;
- an end stop (4) secured to the tape (5), said end stop (4) preventing the passage thereof through one of the slots (11) of the profiled element (10).

2. Device for securing and retaining (7) according to claim 1, **characterised in that** the end stop (4) is arranged at one of the ends of the touch-and-close tape (5).

3. Device for securing and retaining (7) according to any of claims 1 to 2, **characterised in that** the touch-and-close tape (5) is made of a material of the metal type.

4. Device for securing and retaining (7) according to any of claims 1 to 2, **characterised in that** the touch-and-close tape (5) is made of a material of the composite type.

5. Device for securing and retaining (7) according to any of claims 1 to 4, **characterised in that** the profiled element (10) is a cylindrical tube.

6. Device for securing and retaining (7) according to any of claims 1 to 5, **characterised in that** the at least two slots (11) are arranged in such a way as to be diametrically opposite and substantially facing one another.

7. System for attaching comprising a device for securing and retaining (7) according to any of claims 1 to 6 and at least one harness, **characterised in that** said at least one harness (2) is fastened and retained by a winding of the touch-and-close tape (5) around the profiled element (10) and said harness (2) in such a way that a first face of the tape (5) is in contact with the second face of said tape (5).

8. System for attaching according to claim 7, **characterised in that** at least one harness (2) is covered with a heat-shrink tubing (8).

9. Turbomachine comprising at least one pipe secured to said turbomachine and a device (7) for securing and retaining according to any of claims 1 to 6, the clamping element (1) making it possible retain said at least one harness (2), the profiled element (10) and the pipe that are secured.
